# EUROPÄISCHE PATENTSCHRIFT

(11) **EP 0 456 048 B1**
(45) Veröffentlichungstag und Bekanntmachung des Hinweises auf die Patenterteilung: **01.02.1995**
(21) Anmeldenummer: 91106747.8
(22) Anmeldetag: 26.04.1991
(51) Int. Cl.: G02C 5/12

(54) **Seitensteg für Brillenfassungen**
Sidebridge for spectacle frames
Tige de plaquettes pour monture de lunettes

(30) Priorität: 09.05.1990 DE 9005268 U
(43) Veröffentlichungstag der Anmeldung: 13.11.1991
(73) Patentinhaber: Speer, Herbert, D-75239 Eisingen (DE)
(72) Erfinder: Speer, Herbert, D-75239 Eisingen (DE)
(74) Vertreter: Lichti, Heiner, Dipl.-Ing.

(56) Entgegenhaltungen:
- EP-A- 0 053 332
- EP-A- 0 237 881
- DE-A- 2 616 432
- DE-U- 8 912 179
- FR-A- 2 521 736
- US-A- 2 080 847

## Beschreibung

Die Erfindung betrifft einen Seitensteg für Brillenfassungen, bestehend aus einem mit der Brillenfassung oder dem Brillenglas verbundenen Stegarm und einem Stegplättchen mit einem Träger, der eine rechteckige Ausnehmung zum Aufsetzen auf ein flaches Endteil des Stegarms aufweist.

Seitenstege sind dazu bestimmt, die Brille auf der Nase des Brillenträgers abzustützen. Dazu ist der Stegarm an der Brillenfassung oder direkt am Brillenglas befestigt und an seinem freien Ende ist ein Stegplättchen oder Nasenpad beweglich angeordnet, damit sich das Stegplättchen der Nasenform anpassend an die Nasenflügel anlegen kann. Die Beweglichkeit muß in zwei zueinander senkrechten Ebenen gegeben sein. Auf der anderen Seite muß aber eine ausreichend feste und leicht zu montierende Verbindung zwischen Stegarm und Stegplättchen gegeben sein. Schließlich handelt es sich bei den Seitenstegen um Serienteile, die preiswert zu fertigen sein müssen.

Ein Seitensteg des eingangs genannten Aufbaus ist aus der US-PS 2 080 847 bekannt. Der Stegarm aus einem Flachmaterial greift in eine U-förmige und rechteckförmige Aufnahme am Träger ein. Der Träger ist teilweise in das am Stegarm zu befestigende Nasenpad eingebettet. In der dem Stegplättchen gegenüberliegenden Wandung der Ausnehmung ist eine Zunge ausgestanzt, die zur Verbindung von Träger und Stegarm nach innen gebogen werden kann. Das flache Endteil des Stegarms weist eine Ausnehmung auf, in die im zusammengesteckten Zustand die Zunge eingebogen wird. Damit ist das Stegplättchen dauerhaft jedoch beweglich mit dem Stegarm verbunden.

Die vorgenannte Ausführung weist jedoch den Nachteil auf, daß zur Montage ein dauerhaftes Verbiegen der Zunge notwendig ist und damit auf der einen Seite einen zusätzlichen Arbeitsgang erfordert, auf der anderen Seite ein Auswechseln des Nasenpads unmöglich ist.

Andere bekannte Ausführungen (US-PS 2 250 336, 2 082 070, 4 040 729, DE-AS 1 212 314, 1 217 651) weisen aufwendige und häufig mehrteilige Lagerungen auf, die teure Formteile und vielfältige Arbeitsgänge erfordern.

Demgegenüber liegt der Erfindung die Aufgabe zugrunde, einen Seitensteg der vorgenannten Art zu schaffen, der eine einfache Montage des Stegplättchens bei gleichwohl sicherer Verbindung und guter Beweglichkeit gewährleistet.

Diese Aufgabe wird dadurch gelöst, daß das flache Endteil eine nach einer Seite gerichtete Ausbiegung mit einem quer zu seiner Längserstreckung verlaufenden Scheitel und der Träger in einer die Ausnehmung begrenzenden Wandung eine Aussparung aufweist, in die der Scheitel des federnd nachgiebigen Endteils eingerastet ist.

Die erfindungsgemäße Ausbildung hat den Vorteil, daß das Stegplättchen lediglich auf den Stegarm aufgesteckt werden muß und keine weiteren Montagearbeiten notwendig sind, um eine dauerhafte Befestigung zu gewährleisten. Zudem ist es aber auch möglich, ein schadhaftes Stegplättchen auszutauschen. Dazu ist es lediglich notwendig, das Nasenpad vom Stegarm abzuziehen und ein neues Nasenpad wieder aufzustecken, bis es eingerastet ist. Ein unzeitiges Lösen des Stegplättchens läßt sich durch eine entsprechend ausgeprägte Ausbiegung problemlos vermeiden. Sowohl die Ausbildung des Trägers als auch insbesondere des Stegarms mit dem flachen Endteil ist mit einfachen Arbeitsgängen möglich. Gegenüber auf dem Markt befindlichen Seitenstegen läßt sich der erfindungsgemäße Seitensteg wesentlich kostengünstiger herstellen.

Mit Vorteil ist die Ausbiegung in das flache Endteil eingedrückt und ist das Endteil im eingerasteten Zustand an der der Aussparung gegenüberliegenden Wandung der Ausnehmung abgestützt.

Zur Erleichterung des Einsteckens ist es günstig, wenn die Ausnehmung an ihrem Öffnungsrand eine Einführschräge aufweist.

Eine mögliche Ausgestaltung der erfindungsgemäßen Vorrichtung sieht vor, daß die Ausnehmung als einseitig offene Vertiefung ausgebildet ist.

Vorzugsweise sind der Stegarm und sein Endteil einstückig ausgebildet.

Es ist vorgesehen, daß der Stegarm aus einem umformbaren Metall besteht, während der Träger aus beliebigem Metall und das Nasenpad aus Kunststoff hergestellt sein kann.

Eine besonders einfache und preiswerte Fertigung ergibt sich bei einem bevorzugten Ausführungsbeispiel dadurch, daß der Stegarm aus Rundmaterial besteht und an seinem einen Ende zu dem flachen Endteil umgeformt ist. Durch das Flachformen wird zudem eine Verfestigung des Materials im Endbereich erreicht, so daß die für eine dauerhafte Verbindung notwendige Stabilität mit den entsprechenden Federeigenschaften des Endteils in einfacher Weise realisiert werden kann.

Indem der Stegarm wenigstens eine flache Prägung aufweist, die im wesentlichen in einer zum Stegplättchen im montierten Zustand parallelen Ebene liegt, ergeben sich verbesserte Federeigenschaften des Stegarms, so daß das Stegplättchen sich leichter an die Nase des jeweiligen Brillenträgers anpassen kann bzw. der Seitensteg vom Optiker leicht aufgepaßt werden kann.

In einer bevorzugten Ausführung ist vorgesehen, daß der Stegarm im wesentlichen U-förmig ausgebildet ist, das Endteil einen Schenkel der U-Form bildet und die Prägung im anderen Schenkel im wesentlichen gegenüberliegend angeordnet ist, so daß eine mögliche Federachse der Ausprägung in der Nähe des Stegplättchens liegt.

Da das Stegplättchen etwa parallel zum flachen Endteil des Stegarms ausgebildet sein wird, ist vorgesehen, daß das flache Endteil und die flache Prägung im wesentlichen in einer Ebene angeordnet sind, wodurch sich auch eine einfache Herstellung anbietet.

Bei einer weiterhin für Montage und Funktion günstigen Ausführung ist vorgesehen, daß das flache Endteil am Ansatz zum runden Querschnitt des Stegarms und am freien Ende in einer Ebene liegende Abschnitte und daran zur Mitte hin schwach geneigte Abschnitte, die in der Ausbiegung ineinander übergehen, aufweist. Dabei können die in einer Ebene liegenden Abschnitte in der Axialebene des runden Querschnitts des Stegarms liegen.

Eine einfache Verbindung des Trägers mit dem Stegplättchen läßt sich dadurch realisieren, daß der Träger teilweise in dem Stegplättchen eingebettet ist.

Nachstehend ist die Erfindung anhand eines in der Zeichnung wiedergegebenen Ausführungsbeispiels näher erläutert. Es zeigen:
- Figur 1: ein Stegplättchen mit Träger in Ansicht;
- Figur 2: einen Schnitt durch Stegplättchen und Träger;
- Figur 3: eine Seitenansicht von Stegplättchen und Träger;
- Figur 4: einen Stegarm in Seitenansicht und
- Figur 5: den Stegarm gemäß Figur 4 um 90 Grad gedreht.

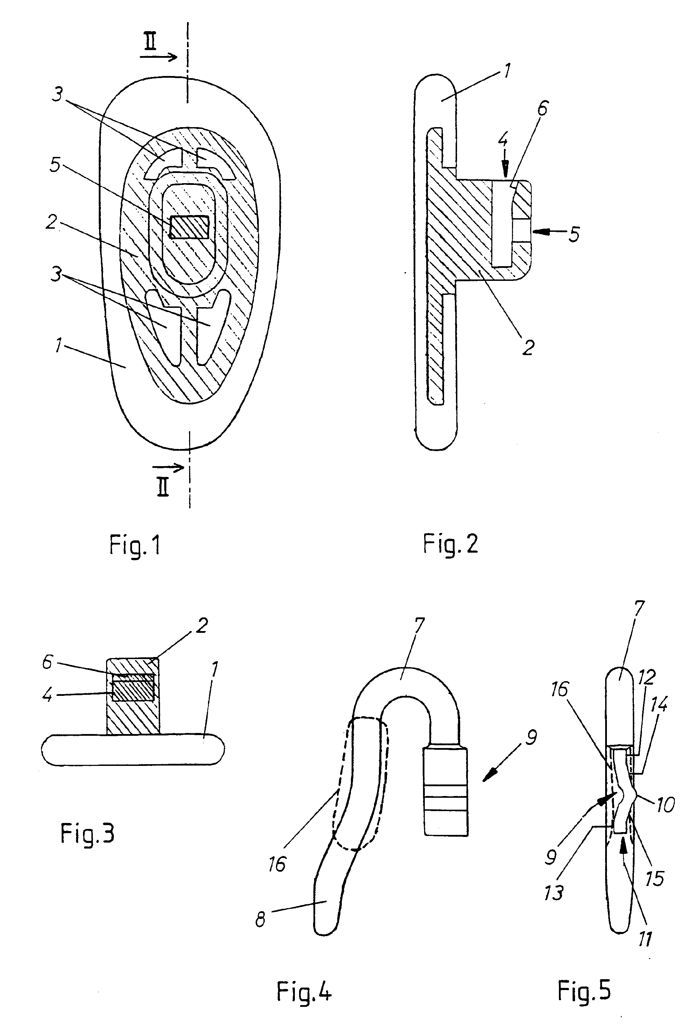

Figur 1 zeigt ein Stegplättchen 1 mit einem Träger 2. Der Träger 2 ist in das Stegplättchen 1 eingebettet und weist einige Durchbrechungen 3 auf, die von dem Material des Stegplättchens 1 ausgefüllt sind und für eine feste Verankerung des Trägers 2 sorgen.

In Figur 2 ist das Stegplättchen 1 mit dem Träger 2 im Schnitt dargestellt. Der Träger weist eine Ausnehmung 4 mit einer Einführschräge 6 auf. Bei diesem Ausführungsbeispiel ist die Ausnehmung 5 als einseitig offene Vertiefung ausgebildet, doch ist auch denkbar, daß sie den Träger 2 ganz durchdringt. An der dem Stegplättchen abgekehrten, die Ausnehmung 5 begrenzenden Wandung des Trägers 2 ist eine durchgehende Aussparung 5 vorgesehen. In Figur 3 ist die schachtartige Vertiefung mit der Einführschräge 6 zu erkennen.

Figur 4 zeigt eine mögliche Ausbildung des Stegarms 7. Das eine Ende 8 des Stegarms 7 wird an einer Brillenfassung oder am Brillenglas befestigt. Der Stegarm 7 besteht aus Rundmaterial und ist an dem dem befestigungsseitigen Ende gegenüberliegenden Ende zu einem flachen Endteil 9 umgeformt. Des weiteren weist der Stegarm 7 als weitere Ausführung eine gestrichelt dargestellte Prägung 16 auf. Diese wird vorzugsweise durch Umformen des Rundmaterials realisiert.

Das flache Endteil 9 des Stegarms 7 weist eine eingedrückte Ausbiegung 10 auf. Es ist auch durchaus denkbar, die Ausbiegung 10 als eine noppenartige Erhebung auszubilden und die Aussparung 4 gegebenenfalls kreisförmig zu gestalten. Aus Figur 5 ist weiterhin ersichtlich, daß das Endteil 9 an der Ansatzstelle am Rundmaterial und am freien Ende Abschnitte 12, 13 aufweist, die etwa in einer Ebene liegen, in der wiederum die Achse des den Stegarm bildenden Rundmaterials liegen kann. Daran schließen sich unter einem kleineren Neigungswinkel von etwa 10 Grad Abschnitte 14, 15 an, die schließlich in die Ausbiegung übergehen.

Zur Montage wird das Ende 11 des Endteils 9 in die Ausnehmung 4 des Trägers 2 gesteckt. Die Einführschräge 6 des Trägers 2 erleichtert dieses. Beim weiteren Einschieben werden die geneigten Abschnitte 14, 15 und die Ausbiegung 10 derart federnd flachgedrückt, daß diese den engsten Teil der schachtartigen Ausnehmung 4 passieren können, bis die Ausbiegung 10 in die Aussparung 5 aufgrund der Federwirkung des Endteils 9 einrastet. Will man das Nasenpad wieder vom Stegarm abziehen, ist natürlich eine erhöhte Kraft erforderlich, da die Aussparung 5, in die die Ausbiegung 10 eingerastet ist, keine Schräge aufweist. Es ist aber auch wichtig, daß das Nasenpad nur schwer vom Stegarm abzuziehen ist, damit es sich nicht ungewollt löst.

Die Ausbildung kann so getroffen sein, daß sich das Endteil 9 an der der Aussparung 4 gegenüberliegenden Seite der Ausnehmung 4 abstützt, so daß das Endteil 9 unter leichter Federspannung steht, und dadurch die Ausbiegung 10 in der Aussparung 5 gehalten ist.

Die Prägung 16 ermöglicht eine Ausfederung des Stegarms 7 um eine Achse, die im wesentlichen parallel zum Stegplättchen 1 liegt, wobei durch die U-förmige Gestaltung des Stegarms 7 der Abstand dieser Achse zum Stegplättchen 1 klein gehalten wird. Da zudem die Prägung 16 dem Endteil 9 etwa gegenüberliegt, wird erreicht, daß sich das Stegplättchen 1 zwar federnd um eine Achse parallel zu seiner Erstreckung verdrehen kann, der Abstand des Stegarmendes 8 und damit der Brillenfassung zur Mitte des Stegplättchens 1 aber im wesentlichen gleichbleibt. Dabei kann die Prägung 16 in Ort, Ausrichtung und Ausdehnung in sehr weiten Bereichen angepaßt werden, um ein wunschgemäßes Einstellen und/oder Verhalten des Seitenstegs zu erzielen.

Die Herstellung des Stegarms ist, wie sich aus vorstehender Ausbildung ergibt, denkbar einfach und preiswert, indem von einem preisgünstigen Rundmaterial ausgegangen wird, das lediglich durch Biege- und Druckvorgänge umgeformt wird.

## Patentansprüche

1. Seitensteg für Brillenfassungen, bestehend aus einem mit der Brillenfassung oder dem Brillenglas verbundenen Stegarm (7) und einem Stegplättchen (1) mit einem Träger (2), der eine rechteckige Ausnehmung (4) zum Aufsetzen auf ein flaches Endteil (9) des Stegarms aufweist, dadurch gekennzeichnet, daß das flache Endteil (9) eine nach einer Seite gerichtete Ausbiegung (10) mit einem quer zu seiner Längserstreckung verlaufenden Scheitel und der Träger (2) in einer die Ausnehmung (4) begrenzenden Wandung eine Aussparung (5) aufweist, in die der Scheitel des federnd nachgiebigen Endteils (9) eingerastet ist.

2. Seitensteg nach Anspruch 1, dadurch gekennzeichnet, daß die Ausbiegung (10) in das flache Endteil (9) eingedrückt ist.

3. Seitensteg nach Anspruch 1 oder 2, dadurch gekennzeichnet, daß das Endteil (9) im eingerasteten Zustand an der der Aussparung (5) gegenüberliegenden Wandung der Ausnehmung (4) abgestützt ist.

4. Seitensteg nach einem der vorangehenden Ansprüche, dadurch gekennzeichnet, daß die Aussparung (5) in der dem Stegplättchen (1) abgekehrten Wandung der Ausnehmung (4) vorgesehen ist.

5. Seitensteg nach einem der vorangehenden Ansprüche, dadurch gekennzeichnet, daß die Ausnehmung (4) an ihrem Öffnungsrand eine Einführschräge (6) aufweist.

6. Seitensteg nach einem der vorangehenden Ansprüche, dadurch gekennzeichnet, daß die Ausnehmung (4) als einseitig offene Vertiefung ausgebildet ist.

7. Seitensteg nach einem der vorangehenden Ansprüche, dadurch gekennzeichnet, daß der Stegarm (7) und sein Endteil (9) einstückig ausgebildet ist.

8. Seitensteg nach einem der vorangehenden Ansprüche, dadurch gekennzeichnet, daß der Stegarm (7) aus umformbarem Metall besteht.

9. Seitensteg nach einem der vorangehenden Ansprüche, dadurch gekennzeichnet, daß der Stegarm (7) aus Rundmaterial besteht und an seinem einen Ende zu dem flachen Endteil (9) umgeformt ist.

10. Seitensteg nach einem der vorangehenden Ansprüche, dadurch gekennzeichnet, daß der Stegarm (7) wenigstens eine flache Prägung (16) aufweist, die im wesentlichen in einer zum Stegplättchen (1) im montierten Zustand parallelen Ebene liegt.

11. Seitensteg nach Anspruch 10, dadurch gekennzeichnet, daß der Stegarm (7) im wesentlichen U-förmig ausgebildet ist, das Endteil (9) einen Schenkel der U-Form bildet und die Prägung (16) im anderen Schenkel im wesentlichen gegenüberliegend angeordnet ist.

12. Seitensteg nach einem der vorangehenden Ansprüche 10 oder 11, dadurch gekennzeichnet, daß das flache Endteil (9) und die flache Prägung (16) im wesentlichen in einer Ebene angeordnet sind.

13. Seitensteg nach einem der vorangehenden Ansprüche, dadurch gekennzeichnet, daß das flache Endteil (9) am Ansatz zum runden Querschnitt des Stegarms und am freien Ende (9) in einer Ebene liegende Abschnitte (12, 13) und daran zur Mitte hin schwach geneigte Abschnitte (14, 15), die in der Ausbiegung (10) ineinander übergehen, aufweist.

14. Seitensteg nach Anspruch 13, dadurch gekennzeichnet, daß die in einer Ebene liegenden Abschnitte (12, 13) in der Axialebene des runden Querschnitts des Stegarms (7) liegen.

15. Seitensteg nach einem der vorangehenden Ansprüche 13 oder 14, dadurch gekennzeichnet, daß die an die in einer Ebene liegenden Abschnitte (12, 13) anschließenden Abschnitte (14, 15) gegenüber jenen unter etwa 10 Grad geneigt sind.

16. Seitensteg nach einem der vorangehenden Ansprüche, dadurch gekennzeichnet, daß der Träger (2) teilweise in dem Stegplättchen eingebettet ist.

## Claims

1. Sidebridge for spectacle frames, comprising a bridge arm (7) connected to the spectacle frame or spectacle lens and a bridge plate (1) having a carrier (2), which has a rectangular recess (4) for mounting on a flat end part (9) of the bridge arm, characterized in that the flat end part (9) has a sideways directed deflection (10) with a top running transversely to its longitudinal extension and the carrier (2) has an opening in a wall bounding the recess (4) and in which is inserted the top of the resilient, elastic end part (9).

2. Sidebridge according to claim 1, characterized in that the deflection (10) is pressed into the flat end part (9).

3. Sidebridge according to claim 1 or 2, characterized in that in the inserted state the end part (9) is supported on the wall of the recess (4) opposite to the opening (5).

4. Sidebridge according to one of the preceding claims, characterized in that the opening (5) is provided in the wall of the recess (4) remote from the bridge plate (1).

5. Sidebridge according to one of the preceding claims, characterized in that the recess (4) has an insertion bevel (6) on its opening rim.

6. Sidebridge according to one of the preceding claims, characterized in that the recess (4) is constructed as a depression open on one side.

7. Sidebridge according to one of the preceding claims, characterized in that the bridge arm (7) and its end part (9) are constructed in one piece.

8. Sidebridge according to one of the preceding claims, characterized in that the bridge arm (7) is made from shapable metal.

9. Sidebridge according to one of the preceding claims, characterized in that the bridge arm (7) is made from round stock and its one end is shaped to the flat end part (9).

10. Sidebridge according to one of the preceding claims, characterized in that the bridge arm (7) has at least one flat impression (16), which is essentially in a plane parallel to the bridge plate (1) in the mounted state.

11. Sidebridge according to claim 10, characterized in that the bridge arm (7) is substantially U-shaped, the end part (9) forms one leg of the U-shape and is positioned substantially facing the impression (16) in the other leg.

12. Sidebridge according to one of the preceding claims 10 or 11, characterized in that the flat end part (9) and the flat impression (16) are essentially located in one plane.

13. Sidebridge according to one of the preceding claims, characterized in that the flat end part (9) at the extension to the round cross-section of the bridge arm and at the free end (9) has portions (12, 13) located in one plane and on these portions (14, 15) slightly inclined towards the centre and which pass into one another in the deflection (10).

14. Sidebridge according to claim 13, characterized in that the portions (12, 13) located in one plane are positioned in the axial plane of the round cross-section of the bridge arm (7).

15. Sidebridge according to one of the preceding claims 13 or 14, characterized in that the portions (14, 15) connected to the portions (12, 13) located in one plane are inclined with respect thereto by an angle of approximately 10°.

16. Sidebridge according to one of the preceding claims, characterized in that the carrier (2) is partly embedded in the bridge plate.

## Revendications

1. Tige de plaquette pour monture de lunettes, comportant un bras (7) de plaquette relié à la monture ou au verre de lunettes, et une plaquette (1) comportant un support (2) présentant un évidement (4) rectangulaire à monter sur une extrémité plate (9) du bras, caractérisée en ce que l'extrémité plate (9) présente une courbure (10) dirigée vers un côté dont le sommet s'étend transversalement par rapport à sa direction longitudinale et en ce que le support (2) présente une encoche (5) dans une paroi délimitant l'évidement (4), dans laquelle le sommet de l'extrémité (9) élastiquement déformable vient s'encastrer.

2. Tige de plaquette selon la revendication 1, caractérisée en ce que la courbure (10) est enfoncée dans l'extrémité plate (9).

3. Tige de plaquette selon l'une quelconque des revendications 1 ou 2, caractérisée en ce qu'en position d'encastrement, l'extrémité plate (9) vient en contact d'appui contre la paroi de l'évidement (4) située en regard de l'encoche (5).

4. Tige de plaquette selon l'une quelconque des revendications précédentes, caractérisée en ce que l'encoche (5) est prévue dans la paroi de l'évidement (4) opposée à la plaquette (1).

5. Tige de plaquette selon l'une quelconque des revendications précédentes, caractérisée en ce que l'évidement (4) présente sur son bord d'ouverture un chanfrein (6) d'insertion.

6. Tige de plaquette selon l'une quelconque des revendications précédentes, caractérisée en ce que l'évidement (4) est conformé en cavité à ouverture unique.

7. Tige de plaquette selon l'une quelconque des revendications précédentes, caractérisée en ce que le bras (7) et l'extrémité (9) sont conformés d'une pièce.

8. Tige de plaquette selon l'une quelconque des revendications précédentes, caractérisée en ce que le bras (7) est en métal déformable.

9. Tige de plaquette selon l'une quelconque des revendications précédentes, caractérisée en ce que le bras (7) est en matériau tourné et qu'il est conformé à l'une de ses extrémités en extrémité plate (9).

10. Tige de plaquette selon l'une quelconque des revendications précédentes, caractérisée en ce que le bras (7) présente au moins un estampage (16) plat, situé dans un plan parallèle à la plaquette (1) à l'état monté.

11. Tige de plaquette selon la revendication 10, caractérisée en ce que le bras (7) présente une forme générale en U, que l'extrémité (9) forme une branche en forme de U et que l'estampage (16) se situe sur l'autre branche sensiblement en regard.

12. Tige de plaquette selon l'une quelconque des revendications précédentes 10 ou 11 caractérisée en ce que l'extrémité plate (9) et l'estampage plat (16) sont pour l'essentiel dans le même plan.

13. Tige de plaquette selon l'une quelconque des revendications précédentes, caractérisée en ce que l'extrémité plate (9) présente au niveau de la transition vers la partie circulaire du bras, et au niveau de l'extrémité libre (9), des portions (12,13) coplanaires et des portions (14,15) légèrement inclinées vers le centre, se confondant dans la courbure (10).

14. Tige de plaquette selon la revendication 13, caractérisée en ce que les portions (12,13) coplanaires sont situées dans le plan axial de la partie circulaire du bras (7).

15. Tige de plaquette selon l'une quelconque des revendications précédentes 13 ou 14, caractérisée en ce que les portions (14,15) consécutives aux portions (12,13) coplanaires sont inclinées selon un angle d'environ 10° vers le bas par rapport à ces dernières.

16. Tige de plaquette selon l'une quelconque des revendications précédentes, caractérisée en ce que le support (2) est partiellement logé dans la plaquette.
